(19) Europäisches Patentamt / European Patent Office / Office européen des brevets

(11) **EP 2 569 410 B1**

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(21) Anmeldenummer: **11716178.6**

(22) Anmeldetag: **13.04.2011**

(51) Int Cl.:
***C12C 7/14*** *(2006.01)*   ***C12C 7/22*** *(2006.01)*
***C12C 7/26*** *(2006.01)*

(86) Internationale Anmeldenummer:
**PCT/EP2011/001873**

(87) Internationale Veröffentlichungsnummer:
**WO 2011/141112 (17.11.2011 Gazette 2011/46)**

(54) **STRIPPVERFAHREN UND VORRICHTUNG ZUM ENTFERNEN UNERWÜNSCHTER AROMASTOFFE AUS WÜRZE**

STRIPPING METHOD AND DEVICE FOR REMOVING UNDESIRED FLAVORING SUBSTANCES FROM WORT

PROCÉDÉ DE RECTIFICATION ET DISPOSITIF D'ÉLIMINATION DE SUBSTANCES AROMATIQUES NON SOUHAITÉES DE MOÛTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.05.2010 DE 102010028980**

(43) Veröffentlichungstag der Anmeldung:
**20.03.2013 Patentblatt 2013/12**

(73) Patentinhaber: **Krones AG**
**93073 Neutraubling (DE)**

(72) Erfinder:
• **FEILNER, Roland**
  **93055 Regensburg (DE)**
• **SAUSPREISCHKIES, Wolfgang**
  **93098 Mintraching (DE)**
• **MAYR, Stephan**
  **93051 Regensburg (DE)**

(74) Vertreter: **Grünecker Patent- und Rechtsanwälte PartG mbB**
**Leopoldstraße 4**
**80802 München (DE)**

(56) Entgegenhaltungen:
**EP-A1- 0 189 657     EP-A2- 2 140 920**
**WO-A2-99/06525      DE-A1-102008 056 744**
**DE-C1- 19 828 686     US-A1- 2003 044 500**

• **FEILNER R ET AL: "Würzestripping mittels Rieselfilm und Strippgas = Wort stripping by means of trickling film and stripping gas", BRAUWELT, NUERNBERG, DE, Bd. 150, Nr. 44, 5. November 2010 (2010-11-05), Seiten 1398-1400, XP009151431, ISSN: 0724-696X**
• **SCHWILL-MIEDANER A ET AL: "Wurzekochung - heutiger Stand der Technologie und Technik = Wort boiling - the present situation of technology and equipment", BRAUWELT, NUERNBERG, DE, Bd. 141, Nr. 18, 1. Januar 2001 (2001-01-01), Seiten 670-673, XP009151432, ISSN: 0724-696X**

**Beschreibung**

Die Erfindung betrifft ein Strippverfahren zum Entfernen unerwünschter Aromastoffe aus Würze sowie eine Vorrichtung zum Durchführen des Verfahrens.

Die EP 0 189 657 A1 beschreibt bereits ein Strippverfahren für Bierwürze, bei dem die Würze in einer Kolonne als dünner Film nach unten fließt.

Die US 2003/044500 A1 offenbart ein Strippverfahren und eine Strippvorrichtung für Bierwürze, bei dem die Würze in einer Kolonne im Gegenstrom zu einem aufsteigenden Strippgasstrom herabrieselt. Der Volumenstrrom des Strippgases wird dabei auch zumindest einmal eingestellt.

Die DE 10 2008056744 A1 offenbart eine Vorrichtung und ein Verfahren zum Strippen von Würze, wobei die Vorrichtung einen Behälter mit Würzezu- und -ablauf sowie eine Verteilereinrichtung in Form eines doppelten Verteilerschirms aufweist, der die Würze als Rieselfilm auf die Behälterwand aufbringt.

Am Markt befindet sich eine Vielzahl von Strippingsystemen, um unerwünschte Aromastoffe, die sich aufgrund einer Reaktionskinetik während des Herstellungsprozesses bei Temperaturen über 80°C bilden, zu entfernen. Ein bekannter unerwünschter Aromastoff ist beispielsweise Dimethylsulfid (DMS, das hauptsächlich aus dem beim Darren des Malzes entstandenen Vorläufer S-Methyl-Methionon (SMM) gebildet wird). Bei ungenügender Austreibung des Reaktionsproduktes oder zu kurzer Heißhaltung der Würze und damit ungenügender Spaltung des Vorläufers, entsteht bei der anschließenden Gärung ein unerwünschter gemüseartiger Geschmack. Der Normwert von 100 $\mu$g/l sollte daher nicht überschritten werden. Viele Brauer streben mittlerweile Werte unter 50 $\mu$g/l an. Bei optimaler Würzekochung wird das Vorläuferprodukt ausreichend gespalten, und bei Kochsystemen mit atmosphärischer Umwälzung das entstehende DMS weitgehend ausgetrieben.

Bei der anschließenden Heißtrubentfernung kommt es allerdings zu einer unerwünschten Nachbildung ohne die Möglichkeit der Austreibung. Herstellungsprozesse mit qualitativ schlechten Malzen und/oder mit verkürzten Kochzeiten und/oder unzureichender Kochung, sind auf nachgeschaltete Strippingprozesse angewiesen, um eine gewünschte Würzequalität zu erreichen. Allerdings kommt es durch den Strippingprozess unvermeidbar auch zu einer Austreibung erwünschter Stoffe wie beispielsweise Hopfenaromen. Beim Strippen haben sich mehrere gängige Systeme etabliert, die beispielsweise auf der Zufuhr von thermischer Energie, Anlegen eines Vakuums oder der Schaffung großer Oberflächen basieren.

Dabei gibt es beispielsweise Systeme, die zur thermischen Strippung heiße Würze über einen beheizten Schirm leiten. Auch die Injektion von heißem Wasserdampf, der eine Würzekolonne durchströmt, ist zur Austreibung unerwünschter Aromastoffe bekannt.

Alle thermischen Systeme haben zur Folge, dass nachträglich Energie eingebracht werden muss und es durch die Hitzeeinwirkung zu weiteren Würzereaktionen kommt. Neben der Zuführung von thermischer Energie sind Verfahren bekannt, die Würze vor der Whirlpoolrast auf eine die DMS nachbildende unkritische Temperatur abkühlen. Dies führt aber aufgrund der, aus den kälteren Temperaturen resultierenden, höheren Viskosität der Würze zu einer Verschlechterung der Heißtrubabscheidung.

Neben dem thermischen Stripping haben sich Systeme, die mit Vakuum arbeiten, am Markt etabliert. Dieser Schritt kann auch durch mehrmalige Expansionsverdampfung erreicht werden, wodurch sich eine starke Siedebewegung mit entsprechender Oberfläche ergibt, die eine Austreibung der Aromastoffe günstig beeinflusst. Nachteiligerweise kommt es bei allen Entspannungsverdampfungen zu einer deutlich schlechtern Abreicherung unerwünschter Aromastoffe als beispielsweise bei einem atmosphärischen Stripping. Zudem ist für die Erzeugung des Vakuums ein zusätzlicher Energie- und Wasserverbrauch notwendig.

Als dritte Prozessgruppe in Bezug auf das Würzestripping ist die Generierung von großen Oberflächen unter Ausnutzung der Eigenenergie der heißen Würze zu nennen. Dabei wird die Würze in ein Gefäß geleitet, wo sie beispielsweise an der Behälterwand nach unten läuft.

Systeme, die ausschließlich auf einer Verteilung der heißen Würze basieren, haben den Nachteil, ihre Effektivität mit abnehmender Würzeeinlauftemperatur zu verringern. Durch niedrige Temperaturen wird unter atmosphärischen Bedingungen trotz einer effektiven größtmöglichen Oberfläche wenig an Wasserdampf und unerwünschten Aromastoffen in die Gasphase übergehen.

Hiervon ausgehend, liegt der vorliegenden Erfindung die Aufgabe zugrunde, ein Strippverfahren und eine Strippvorrichtung bereitzustellen, die es ermöglichen, auf zuverlässige Art und Weise ohne Einsatz von großen Energiemengen, unerwünschte Aromastoffe zu entfernen und deren Nachbildung zu verhindern.

Erfindungsgemäß wird diese Aufgabe durch die Merkmale der Ansprüche 1 und 9 gelöst.

Gemäß der vorliegenden Erfindung wird also zunächst Würze in einen Strippbehälter eingeleitet und ein nach unten fließender Rieselfilm erzeugt. Unter Rieselfilm versteht man hier einen Film, der an einer Behälterinnenwand nach unten in Richtung Ablauf fließt. Der Rieselfilm ist dabei unterhalb einer Verteilereinrichtung vorzugsweise im Wesentlichen rotationssymmetrisch zur Mittelachse des Strippbehälters ausgebildet. Der Rieselfilm kann beispielsweise dann in ein Flüssigkeitsreservoir in den unteren Bereich des Strippbehälters, dessen Oberfläche einen maximalen Füllstand nicht überschreitet, eingeleitet werden. Durch Erzeugung des Rieselfilms kann die Oberfläche der Würze wesentlich vergrößert werden, so dass über die Grenzschicht zum innenliegenden Gasraum Wasserdampf sowie unerwünschte Aromastoffe, wie beispielsweise DMS, abgereichert werden können.

Durch das Einblasen von Strippgas in den Strippbehälter kann das Exsorbieren bzw. Austreiben von unerwünschten Aromastoffen sowie Wasserdampf begünstigt werden. Hier gilt, dass der Gesamtdruck im Strippbehälter der Summe aller Partialdrücke der unterschiedlichen Gase im Strippbehälter entspricht. Im Gleichgewichtszustand ist der Partialdruck eines gelösten Gases über dem Rieselfilm zu seiner Konzentration im Rieselfilm proportional. Wird nun durch Einleiten des Strippgases der Partialdruck (also die Konzentration) des Strippgases im Strippbehälter erhöht, wird gleichzeitig der Partialdruck des Wasserdampfs bzw. der unerwünschten Aromastoffe erniedrigt, so dass durch diese Partialdruckverschiebung beispielsweise Wasserdampf und Aromastoffe vermehrt aus dem Rieselfilm ausgetrieben werden. Dazu ist es nicht notwendig, das Strippgas zu heizen, so dass ein Strippen mit einem sehr geringen Energieaufwand möglich ist. Die abgereicherten Aromastoffe sowie der Wasserdampf können dann mit dem Strippgasstrom abgeleitet werden.

Mit dem Einblasen von Strippgas in den externen Strippbehälter kann also die Reduktion von ungewünschten Aromastoffen, wie DMS in der Heißwürze beeinflusst werden, so dass eine Austreibung auf einem konstant hohen Niveau gehalten werden kann, selbst bei niedrigen Würzeeinlauftemperaturen oder unterschiedlichen Würzevolumenströmen.

Ganz besonders vorteilhaft wird das Verfahren für von Heißtrub befreiter Würze eingesetzt, die nach dem Strippen weiter gekühlt wird. Wird der Strippvorgang nach der Heißtrubabscheidung durchgeführt, so können unerwünschte Aromastoffe, die bei der Heißtrubabscheidung nachgebildet werden, wirksam entfernt werden. Da bei dem erfindungsgemäßen Verfahren keine weitere thermische Energie zugeführt wird, kann eine Nachbildung beim und nach dem Strippvorgang verhindert werden. Wenn die Würze beim Strippvorgang bereits von Heißtrub befreit ist, kann sich der Rieselfilm besser und gleichmäßiger ausbilden.

Es ist besonders vorteilhaft, wenn die Auslauftemperatur der Würze kleiner ist als die Einlauftemperatur der Würze. Das bedeutet, dass die im Rieselfilm herablaufende Würze durch das Strippgas gekühlt wird. Das heißt, dass durch das Strippgas einerseits aufgrund der Partialdruckverschiebung vermehrt Wasser und Aromastoffe in die Gasphase übergehen, andererseits aber auch durch die Temperaturreduktion der Würze eine Neubildung an unerwünschten Aromastoffen entgegengewirkt wird. Da keine zusätzliche Energie zugeführt werden muss, kann das Strippgas unbeheizt sein, und so z.B. Umgebungstemperatur aufweisen. Das Strippgas kann somit vorzugsweise Raumluft bzw. Expansionstemperatur, also eine Temperatur < 40°C aufweisen.

Gemäß einer bevorzugten Ausführungsform der vorliegenden Erfindung wird der Volumenstrom des Strippgases eingestellt bzw. geregelt, so dass unabhängig von der Würzeeinlauftemperatur eine konstante Menge an Wasserdampf und unerwünschten Aromakomponenten ausgetrieben werden kann.

Gemäß der Erfindung wird der Volumenstrom des Strippgases in Abhängigkeit der Temperaturdifferenz $\Delta T$ zwischen Einlauftemperatur und Auslauftemperatur der Würze eingestellt, vorteilhafterweise automatisch geregelt. Da die Temperaturabnahme $\Delta T$ proportional zum entstehenden Wasserdampf bzw. der in die Gasphase übergegangenen Aromakomponenten, d.h. der Strippgasmenge ist, kann über die Einstellung bzw. Regelung des Volumenstroms des Strippgases die Strippmenge genau eingestellt werden.

Auf niedrigere Würzeeinlauftemperaturen kann mit einer größeren Menge Strippgas reagiert werden. Ein solches Verfahren lässt sich einfach und kostengünstig realisieren. Eine konstante Strippgasmenge lässt sich also bei unterschiedlichen Würzeeinlauftemperaturen und auch unabhängig vom Volumenstrom der Würze einstellen. Die Temperaturdifferenz kann durch Messen der Einlauf- und Auslauftemperatur.

der Würze und Differenzbildung ermittelt werden. Eine solche Regelung ist besonders einfach. Es ist jedoch auch möglich, das Strippgasvolumen in Abhängigkeit eines zur Temperaturdifferenz proportionalen Werts einzustellen, der beispielsweise auf der Grundlage der Einlauftemperatur der Würze sowie de5s Volumenstroms der Würze bei bekannter Rieselfilmoberfläche ermittelt wird.

In vorteilhafter Weise wird der Volumenstrom des Strippgases derart eingestellt bzw. geregelt, dass sich eine vorbestimmte Temperaturdifferenz $\Delta T$, die in einem Bereich von 0,1 bis 10°C, insbesondere 0,1 - 5°C liegt, ergibt. In diesem Bereich können die ungewünschten Aromastoffe besonders gut ausgetrieben werden. Das heißt, dass für verschiedene Sorten ein gewünschtes $\Delta T$ festgelegt wird und somit eine bestimmte Menge an unerwünschten Aromakomponenten ausgetrieben werden kann.

Vorteilhafterweise wird als Strippgas zumindest eines der folgenden Gruppe verwendet: Inertgas, Luft, $CO_2$, $N_2$, $O_2$ . Vorzugsweise ist das Strippgas steril und wasserdampffrei. Bei der Verwendung von $N_2$, kann in besonders kostengünstiger Weise das $N_2$ durch einen Stickstofferzeuger aus der Umgebungsluft erzeugt werden.

Durch Einleiten des Strippgases kann im Vergleich zum atmosphärischen Druck, ein leichter Überdruck in dem Strippbehälter herrschen. Dieser Überdruck beträgt jedoch maximal 250 mbar zusätzlich zum atmosphärischen Druck.

Es ist vorteilhaft, wenn das Strippgas insbesondere zentral über eine nach oben oder unten gerichtete Einströmöffnung in den Gasraum des Strippbehälters eingeleitet wird und/oder direkt in den Füllstand der Würze eingeblasen wird. Wenn das Strippgas über eine nach unten gerichtete Einströmöffnung in den Gasraum eingeleitet wird, ergibt sich der Vorteil, dass auch die Spiegeloberfläche der Würze im unteren Bereich des Strippgasbehälters "abgeblasen" wird, wodurch auch hier die Temperatur weiter wirksam herabgesetzt wird und Wasserstoff und Aromakomponenten in die Gasphase übergehen.

In besonders bevorzugter Ausführungsform wird das Strippgas also im Gegenstrom zum nach unten geführten Rieselfilm nach oben aufsteigen.

Die erfindungsgemäße Vorrichtung zum Durchführen des Verfahrens umfasst einen Strippbehälter, einen Würzezulauf, eine Verteilereinrichtung zum Erzeugen eines Rieselfilms, einen Würzeablauf sowie eine Strippgas Zu- und Ableitung, die einen Strippgasstrom im Strippbehälter erzeugen.

Als Strippgas kann neben einem externen Behälter auch eine Würzepfanne, Maischbehälter, ein Whirlpool oder sonstige in der Brauerei vorkommende Behältnisse Verwendung finden.

Eine entsprechende Vorrichtung kann relativ einfach und kostengünstig hergestellt werden. Es ist vorteilhaft, wenn die Vorrichtung einen Temperatursensor zum Messen der Einlasstemperatur der Würze und einen Temperatursensor zum Messen der Auslauftemperatur der Würze umfasst. Ebenso kann die Vorrichtung ein Stellventil zum Einstellen des Volumenstroms des Strippgases aufweisen. Mit einer solchen Anordnung kann der Volumenstrom des Strippgases z.B. in Abhängigkeit einer Temperaturdifferenz $\Delta T$ der Einlauf- und Auslauftemperatur eingestellt werden.

Um auch Temperaturschwankungen der Würze gut berücksichtigen zu können ist es vorteilhaft, den Volumengasstrom nicht nur auf ein bestimmtes $\Delta T$ einzustellen sondern eine Regeleinrichtung bereitzustellen, die den Volumenstrom des Strippgases in Abhängigkeit der Temperaturdifferenz $\Delta T$ zwischen Einlauftemperatur und Ablauftemperatur der Würze regelt.

Um einen gleichmäßigen Strippgasstrom zu realisieren ist es vorteilhaft, wenn die Strippgaszuleitung derart ausgebildet ist, dass sie eine zentral im Behälter, vorzugsweise nach unten gewandte Einströmöffnung aufweist.

Zur Erzeugung des Rieselfilms können unterschiedliche Verteilereinrichtungen vorgesehen sein. Es ist möglich, beispielsweise eine Dralleinlaufdüse vorzusehen, die die Würze in Rotation versetzt, derart, dass sie von einem oberen Bereich des Behälters als Rieselfilm die Behälterinnenwand herabläuft. Es ist jedoch auch möglich, einen Würzeleitschirm, insbesondere einen Doppelschirm vorzusehen, der die Würze in einem dünnen Film in Richtung der Behälterinnenwand spritzt, so dass ein Rieselfilm an der Behälterinnenwand herabläuft. Schließlich ist es auch möglich, im oberen Bereich des Behälters eine Ringleitung vorzusehen, die entweder mehrere am Umfang angeordnete Öffnungen oder einen Ringspalt aufweist, die die Würze zur Behälterinnenwand leiten, derart, dass die Würze an der Behälterinnenwand als Fallfilm bzw. Rieselfilm herablaufen kann.

Besonders vorteilhaft ist es, eine Sudhausanordnung vorzusehen, wobei die erfindungsgemäße Strippvorrichtung zwischen der Einrichtung zur Heißtrubabscheidung und der Einrichtung zur Würzekühlung angeordnet ist. Dann weist die Einlauftemperatur der Würze in den Strippbehälter eine Temperatur in einem Bereich von 80°-100°C auf.

Es ist vorteilhaft, wenn der Strippbehälter einen Boden aufweist, dessen Durchmesser nach unten abnimmt und vorzugsweise konisch ausgebildet ist und/oder einen Sensor zur Füllstandskontrolle aufweist. Durch den konischen Boden ist im Auslaufbereich des Strippbehälters ein hoher Füllstand bei gleichzeitig niedrigem Volumen möglich, der genügend Vordruck für die nachfolgende Würzepumpe gewährleistet. Durch den Sensor zur Füllstandskontrolle kann ein gewünschter Füllstand festgelegt werden.

Die Erfindung wird nachfolgend unter Bezugnahme folgender Figuren näher erläutert.

Fig. 1    zeigt grob schematisch einen Strippbehälter gemäß einer ersten Ausführungsform der vorliegenden Erfindung.

Fig. 2    zeigt grob schematisch einen Strippbehälter gemäß einem weiteren Ausführungsbeispiel der vorliegenden Erfindung.

Fig. 3    zeigt grob schematisch eine Vorrichtung gemäß der vorliegenden Erfindung einschließlich Strippgasregelung.

Fig. 4    zeigt einen Graphen, der den Volumenstrom des Strippgases in Abhängigkeit der Einlauftemperatur der Würze bei vorgegebenem $\Delta T$ zeigt.

Fig. 5    zeigt einen Graphen, bei dem die Menge an DMS Rest (in %) gegen $\Delta T$ gemäß der vorliegenden Erfindung aufgetragen ist.

Fig. 6A    zeigt schematisch einen Längsschnitt durch ein Drallelement.

Fig. 6B    zeigt perspektivisch den Einsatz im Drallelement.

Fig. 7    zeigt schematisch einen Längsschnitt durch einen Strippbehälter mit einem Doppelschirm als Würzeverteilereinrichtung.

Fig. 8    zeigt grob schematisch eine Sudhausanordnung mit Einrichtung zur Heißtrubabscheidung, Strippbehälter und Würzekühler.

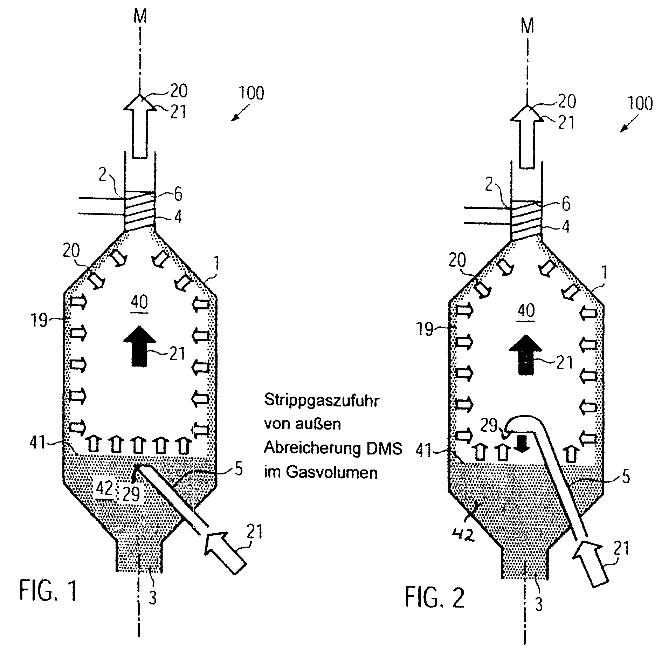

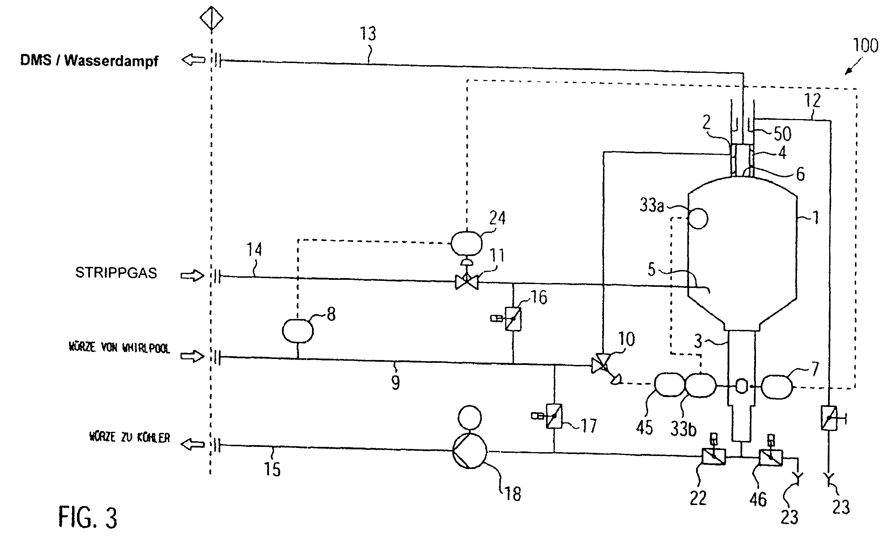

Fig. 1 zeigt schematisch eine Ausführungsform eines Strippbehälters 1 einer Strippvorrichtung 100 gemäß der vorliegenden Erfindung. Der Strippbehälter 1 umfasst einen unteren Bereich mit einem Boden, dessen Durchmesser nach unten abnimmt und wie aus Fig. 1 hervorgeht, im Wesentlichen konisch ausgebildet ist. Durch diese Bodenform ist ein hoher Füllstand bei gleichzeitig niedrigem Volumen möglich, der genügend Vordruck für eine nachfolgende Würzepumpe 18 (siehe z.B. Fig. 3) gewährleistet. Auch der obere Bereich ist so ausgebildet, dass sein Durchmesser nach oben hin abnimmt. Hier ist der obere Bereich ebenfalls im Wesentlichen konisch ausgebildet, könnte jedoch ebenfalls eine abgerundete Form aufweisen. Ein solcher Strippbehälter kann beispielsweise ein Volumen von 1-5 m$^3$ aufweisen. Im oberen Bereich des Strippbehälters ist ein Würzezulauf 2 vorgesehen, über den Würze in den Strippbehälter eingeleitet werden kann.

Der Zulauf 2 ist mit einer Verteilereinrichtung 4 versehen, die derart ausgebildet ist, dass sie einen Rieselfilm 19 an einer Behälterinnenfläche ausbildet. Unter Rieselfilm versteht man hier einen Fallfilm, der an einer Behälterinnenwand nach unten in Richtung Würzeablauf 3 fließt. Der Rieselfilm ist dabei unterhalb der Verteilereinrichtung 4 vorzugsweise rotationssymmetrisch zur Mittelachse M des Strippbehälters ausgebildet. Der Rieselfilm kann beispielsweise dann in ein Flüssigkeitsreservoir 42 im unteren Bereich des Strippbehälters 1 laufen. Die Rieselfilmdicke liegt in einem Bereich von 0,1-1 mm. Der Rieselfilm weist zwei Grenzflächen auf, eine, die zur Behälterinnenwand gerichtet ist und eine zu dem inneren Gasraum 40. Somit wird in effizienter Art und Weise eine große Oberfläche der Würze erzeugt.

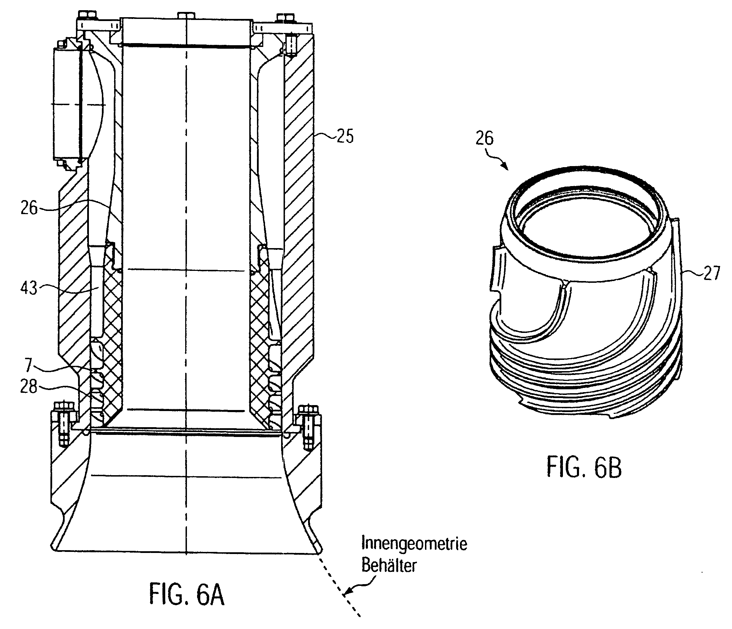

In diesem Ausführungsbeispiel ist als Verteilereinrichtung 4 eine Dralleinlaufdüse vorgesehen. Eine solche Dralleinlaufdüse ist näher in Fig. 6A und B gezeigt. Wie aus Fig. 6A zu erkennen ist, umfasst die Dralleinlaufdüse einen im Wesentlichen hohlzylindrischen Außenkörper 25 mit einem Würzezulauf, sowie einen Einsatz 26, der als hohlzylindrische Hülse ausgebildet ist und einen kleineren Durchmesser als der Außenkörper 25 aufweist, derart, dass sich zwischen dem Einsatz und dem Außenkörper ein Flüssigkeitskanal 43 ausbildet. Der Einsatz 26 weist zumindest im unteren Bereich, wie aus Fig. 6B hervorgeht, mehrere spiralförmige Vorsprünge 27 auf, die an die Innenwandung des Körpers 25 im eingesetzten Zustand angrenzen und im Wesentlichen spiralförmige Kanäle 28 für die Würze bilden. Die Würze, die durch die Aussparung 43 und die Kanäle 28 geleitet wird, wird somit im Wesentlichen tangential beschleunigt und kann über mehrere ringförmig verteilte Spaltabschnitte zwischen Außenkörper 25 und Einsatz 26 im unteren Bereich der Einlaufdüse an die Innenwand des Strippgehäuses angeströmt werden. Das heißt, dass die Würze in Rotation versetzt wird, und in einem dünnen, turbulenten Rieselfilm 19 über die gesamte Behälterinnenfläche nach unten fließt. Durch die Strömungskanäle 28 in der Einlaufdüse weist die Würze eine erhöhte Geschwindigkeit und somit einen erhöhten dynamischen Druck auf, was mit dem Eintritt in den Strippbehälter die Austreibung von unerwünschten Aromastoffen begünstigt.

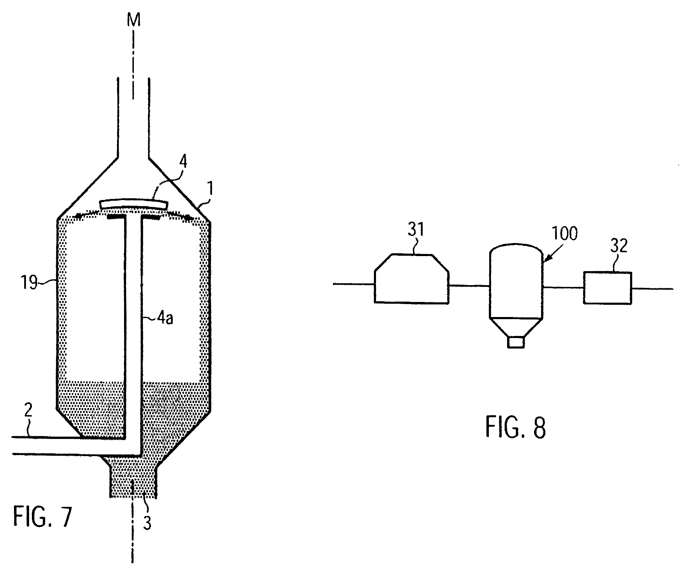

Die Verwendung dieses Drallelements ist besonders vorteilhaft. Es ist jedoch auch möglich, andere Verteilereinrichtungen zu verwenden, beispielsweise den in Fig. 7 gezeigten Doppelschirm. An den Zulauf 2 schließt sich z.B. ein Verteilerrohr 4a an, das sich vorzugsweise entlang der Mittelachse M bis in einen oberen Bereich des Strippbehälters 1 erstreckt. Am oberen Ende des Rohrs 4a ist ein unterer, im Wesentlichen rotationssymmetrischer, nach unten gekrümmter Schirm angeordnet. Beabstandet zu diesem Schirm ist ein ebenfalls im Wesentlichen rotationssymmetrischer oberer Schirm angeordnet, der in diesem Ausführungsbeispiel einen größeren Durchmesser als der untere Schirm aufweist und ebenfalls nach unten gekrümmt ist. Zwischen diesen beiden Schirmen ergibt sich ein Ringspalt, über den die aufsteigende Würze nach außen an die Behälterinnenwand des Strippergefäßes 1 gespritzt wird, und von dort, wie durch die Pfeile dargestellt ist, als Rieselfilm nach unten herablaufen kann.

Wenn auch nicht dargestellt, ist es beispielsweise auch möglich, im oberen Bereich des Strippbehälters eine Ringleitung vorzusehen, die entweder mehrere am Umfang angeordnete Öffnungen oder aber einen Ringspalt aufweist, die die Würze zur Behälterinnenwand leiten, derart, dass die Würze an der Behälterinnenwand als Fall- bzw. Rieselfilm herablaufen kann.

Neben Würzezu- und -ablauf 2, 3 umfasst der Behälter auch eine Strippgaszuleitung 5 im unteren Bereich des Behälters sowie eine Strippgasableitung 6, vorzugsweise im oberen Bereich des Behälters. Durch die Strippgaszu- und -ableitung kann ein Strippgasstrom 21 erzeugt werden. Bei diesem Ausführungsbeispiel ist die Strippgasableitung am oberen Ende des Behälters angeordnet und erstreckt sich durch den inneren Einsatz 26 der Düse 4. Wie aus Fig. 1 hervorgeht, ragt vom unteren Teil des Behälters 4 aus eine Gasleitung in den Behälter 1. Die Gasleitung weist eine Öffnung 29 auf. Die Öffnung 29 ist auf einer Höhe angeordnet, die unterhalb einer Spiegelfläche 41 des Würzereservoirs 42 angeordnet ist. Der maximale Füllstand 41 kann durch eine Füllstandsregelung, wie nachfolgend noch näher erläutert wird, festgelegt und eingestellt werden. Über die Öffnung 29 kann das Strippgas 21 in die Würze und dann in den Gasraum 40 des Behälters eintreten. Die Leitung ,bzw. Öffnung, könnte auch über die Oberfläche 41 aus der Würze in den Gasraum ragen.

Das in Fig. 2 gezeigte Ausführungsbeispiel entspricht dem in Fig. 1 gezeigten Ausführungsbeispiel mit der Ausnahme, dass die Öffnung 29 oberhalb der Oberfläche 41 nach unten, d.h. zu der Oberfläche 41 der Würze gerichtet ist. Die Öffnung 29 befindet sich vorzugsweise im Bereich der Mittelachse M des Behälters. Wenn das Strippgas über eine nach unten gerichtete Einströmöffnung in den Gasraum 40 eingeleitet wird, ergibt sich der Vorteil, dass auch die Spiegeloberfläche 41 der Würze im unteren Bereich des Strippgasbehälters "abgeblasen" wird, wodurch vermehrt Aromastoffe bzw. Wasserdampf ausgetrieben werden können. Alternativ oder zusätzlich kann das Strippgas auch direkt über eine entsprechende Zuleitung in das Reservoir 42 eingeblasen werden.

Das Strippgas, z.B. ein Inertgas, sterile Luft, $CO_2$, $O_2$ oder $N_2$, kann also über die Strippgaszuleitung 5 im Gegenstrom zum herabfließenden Rieselfilm 19 nach oben strömen.

Durch das Einblasen des Stripgases in den Strippbehälter 1 kann das Austreiben von unerwünschten Aromastoffen sowie Wasserdampf 20 kontrolliert werden.

Hier gilt, dass der Gesamtdruck pg im Strippbehälter der Summe aller Partialdrücke pi der unterschiedlichen Gase im Gasraum 40 des Strippbehälters entspricht.

$$p_g = \Sigma \; p_i$$

$$p_g = ( \; p_{Luft} + p_{DMS} + p_{Restkomponenten} \; )+ p_{H_2O}$$

wobei z.B. $p_g$ =1000 mbar; $P_{Luft} + p_{DMS} + P_{Restkomponenten}$ = 150 mbar; $P_{H_2O}$ = 850 mbar ( bei T = 95°) ist.

Die Partialdrücke verhalten sich wie die entsprechenden Volumina. Der Partialdruck eines gelösten Gases über dem Rieselfilm, d.h. im Gasraum 40, ist im Gleichgewicht zu seiner Konzentration in dem Rieselfilm proportional. Wird nun durch Einleiten des Strippgases 21 der Partialdruck des Strippgases im Strippbehälter erhöht, wird gleichzeitig der Partialdruck des Wasserdampfs, bzw. der unerwünschten Aromastoffe 20 erniedrigt, so dass durch diese Partialdruckverschiebung beispielsweise Wasserdampf und DMS sowie auch die restlichen Aromakomponenten vermehrt exorbiert werden. Dazu ist es nicht notwendig, das Strippgas zu heizen, so dass ein Strippen mit einem sehr geringen Energieaufwand möglich ist. Die abgereicherten Aromastoffe sowie der Wasserdampf können dann mit dem Strippgasstrom abgeleitet werden.

Mit dem Einblasen von Strippgas in den externen Strippbehälter 1 kann also die Reduktion von ungewünschten Aromastoffen in der Heißwürze gezielt beeinflusst werden, und zwar in Abhängigkeit des Strippgasvolumenstroms, so dass eine Austreibung auf einem konstant hohen Niveau gehalten werden kann, selbst bei niedrigen Würzeeinlauftemperaturen oder unterschiedlichen Würzevolumenströmen.

Die Würze kühlt beim Herablaufen als Rieselstrom ab. Die Temperaturabnahme ist proportional zum Strippgasvolumenstrom und somit auch zur Menge an ausgetriebenem Wasser bzw. Aromakomponenten, wobei die Strippgasmenge - entsprechend einem Wirkungsgrad - das treibende Gefälle zwischen Wasserdampf und Aromastoffen am Fallfilm zum Behälterinneren 40 aufrechterhält.

Somit kann der Volumenstrom des Strippgases in Abhängigkeit der Temperaturdifferenz ΔT zwischen Einlauftemperatur und Auslauftemperatur der Würze eingestellt, insbesondere automatisch geregelt werden, um somit eine konstante Menge an ausgetriebenen Wasser- bzw. Aromakomponenten einzustellen, unabhängig von der Würzeeinlauftemperatur oder dem Würzevolumenstrom. Da die Auslauftemperatur der Würze kleiner ist als die Einlauftemperatur der Würze, kann das Strippgas Raumtemperatur oder Expansionstemperatur aber in der Regel eine Temperatur < 40 °C aufweisen und ist demnach unbeheizt und auch nicht gekühlt. Es hat sich herausgestellt, wie nachfolgend näher erläutert wird, dass es vorteilhaft ist, den Volumenstrom des Strippgases so einzustellen, dass eine vorbestimmte Temperaturdifferenz ΔT in einem Bereich von 0,1 bis 10°C, insbesondere 0,1 - 5°C liegt. Ein bestimmtes ΔT kann experimentell für unterschiedliche Würzesorten bestimmt werden ( z.B. durch quantitative Analyse von DMS), so dass die Wasserdampfbildung bzw. die ebenfalls zu ΔT proportionale Menge an ausgetriebenen Aromakomponenten eingestellt werden kann.

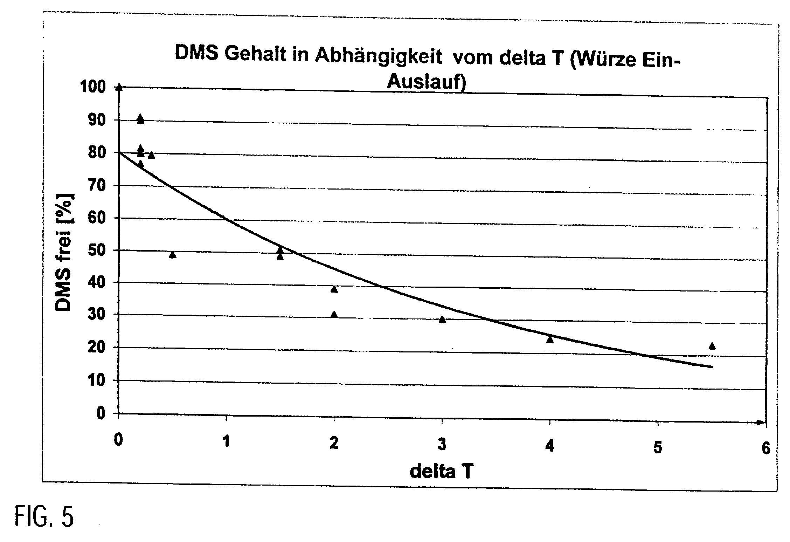

Das nachfolgende Diagramm zeigt den Gehalt an freiem DMS in Würze, die mit der vorab beschriebenen Vorrichtung gestrippt wurde, in Abhängigkeit von ΔT. Wie dem Graphen in Fig. 5 zu entnehmen ist, ist die Menge an ausgetriebenem DMS proportional zu ΔT zwischen Einlauftemperatur und Auslauftemperatur der Würze. Das heißt, dass mit steigendem ΔT die Restmenge an freiem DMS abnimmt. Somit kann über einen Sortenparameter ein gewünschtes ΔT und somit eine gewünschte Menge an ausgetriebenem DMS festgelegt werden. Bei dem in Fig. 5 gezeigten Diagramm wurde beispielsweise festgelegt, dass ein Bereich ΔT zwischen 0,5 und 3° K vorteilhaft ist, da dieser Bereich einer DMS-Reduktion entspricht, die für eine bestimmte Sorte ausreichend ist, wobei gleichzeitig verhindert wird, dass zu viele gewünschte Aromastoffe mit ausgetrieben werden. Es kann nun ein entsprechender ΔT-Bereich oder aber ein bestimmter Wert für ΔT festgelegt werden.

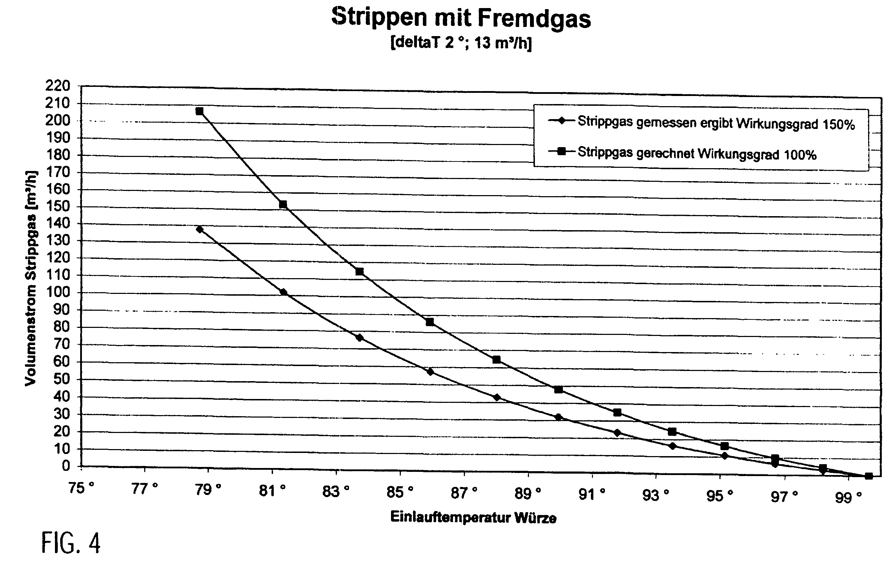

Die Fig. 4 zeigt den Volumenstrom von Strippgas in $m^3$ pro Stunde bei unterschiedlichen Würzeeinlauftemperaturen für ΔT = 2 ° K und einer Strippleistung von 13 $m^3$/h. Die obere Kurve zeigt die berechnete Strippgasmenge. Die untere Kurve zeigt die gemessene Strippgasmenge in der Praxis zur Aufrechterhaltung von ΔT. Der Wirkungsgrad für die berechnete Kurve beträgt hier 100 %, wobei der Wirkungsgrad sich über die Partialdruckdifferenzen der im Gasraum befindlichen Gase und den dynamischen Drücken der Flüssigkeitsströme definiert und bis zu 150% in der Praxis betragen kann. D.h., dass dadurch, dass das Strippgas im Gegenstrom über die Würzeoberfläche strömt, es dadurch und aufgrund der dynamischen Drücke der strömenden Würze im Austritt der Düse und im Rieselfilm zu einer erhöhten Austreibung kommt und im Vergleich zu den theoretisch ermittelten Strömen in der Praxis ein geringerer Strippgasstrom notwendig ist um eine bestimmte Menge unerwünschter Aromastoffe auszutreiben. Der Wirkungsgrad entspricht hier also einem Verhältnis von theoretischer Strippgasmenge zu tatsächlicher Strippgasmenge.

Wie der Fig. 4 zu entnehmen ist, ergibt sich für eine Würzeeinlauftemperatur in einem Bereich von ca. 93 bis 97°C ein geeigneter Volumenstrom für das Strippgas von ca. 10 bis 25 $m^3$ pro Stunde. Der Volumenstrom des Strippgases kann dabei über ein Stellventil eingestellt werden oder aber automatisch über eine Regelung geregelt werden, so dass stets eine exakte Menge an unerwünschten Aromastoffen ausgetrieben werden kann.

Fig. 3 zeigt ein entsprechendes Ausführungsbeispiel, das eine entsprechende Regelung des Strippgasstromes ermöglicht. Fig. 3 weist einen Strippbehälter 1 auf, wie er zuvor im Zusammenhang mit den Fig. 1 und 2 beschrieben wurde. Der Strippbehälter 1 weist hier weiter eine Einrichtung zur Füllstandskontrolle auf, derart, dass ein maximaler Füllstand 41 im Behälter 1 eingestellt werden kann. Bei dieser Ausführungsform umfasst die Füllstandskontrolle zwei Drucksensoren 33a und 33b. Der Drucksensor 33b misst den Druck in einem unteren Bereich, insbesondere Auslaufbereich des Behälters 1, und der Drucksensor 33a misst den Druck in einem oberen Bereich des Behälters 1, der oberhalb des maximalen Flüssigkeitsspiegels liegt. Über Differenzdruckmessung kann mittels eines Reglers 45 ein bestimmter Füllstand eingestellt werden. Der Regler 45 steuert ein Stellventil 10 in einer Würzeleitung 9 an und stellt somit einen bestimmten Volumenstrom der Würze ein. Auch ein Ablaufventil 22 in einer Ablaufleitung 15, die gestrippte Würze zu einem Kühler führt, kann mit dem Regler 45 verbunden sein. Durch Ansteuern der beiden Stellventile kann ein bestimmter Füllstand eingestellt werden. Bei geregeltem Füllstand wird die Würze dann kontinuierlich zu und abgeleitet. Ferner ist eine Würzepumpe 18 vorgesehen, die aus dem geregelten Füllstand im Behälter 1 die Würze mit konstantem Volumenstrom zur Würzekühlung fördert. In der Würzeleitung 15 ist ebenfalls noch ein Stellventil 46 angeordnet, über das Flüssigkeit aus dem Strippbehälter (z.B. Reinigungsflüssigkeit) über den Kanal 23 verworfen werden kann.

Schließlich ist noch die Leitung 14 für das Strippgas, z.B. $CO_2$, vorgesehen. In dieser Leitung 14 befindet sich das Stellventil 11, über das der Volumenstrom des Strippgases, der dem Behälter 1 zugeführt wird, einstellbar ist. Außerdem weist die Anordnung noch einen Temperatursensor 8 auf, der hier in der Würzeleitung 9 vorgesehen ist, um die Temperatur der einlaufenden Würze zu messen. Schließlich ist im Auslaufbereich des Behälters 1 ein weiterer Temperatursensor 7 vorgesehen, der die Auslauftemperatur der Würze bestimmt. Der Temperatursensor 7 ist hier in dem unteren zulaufenden Ende des Behälters 1 angeordnet, könnte jedoch auch beispielsweise in der Leitung 15 angeordnet sein. Die Temperatursensoren 8 und 7 sind mit einem Regler 24 verbunden, der in Abhängigkeit der Temperaturdifferenz $\Delta T$ den Volumenstrom des Strippgases über das Stellventil 11 regelt.

Im oberen Bereich des Behälters 1 ist hier noch ein Kondensatrücklaufschutz 50 gezeigt sowie eine Kondensatleitung 12, über die das Kondensat über den Abfluss 23 verworfen werden kann. Über die Leitung 13 kann der ausgetriebene Wasserdampf sowie die anderen ausgetriebenen Komponenten abgeleitet werden und kondensiert und verworfen werden. Die Energie des kondensierenden Wasserdampfs kann dabei rückgewonnen und weiter verwendet werden.

Zwischen den Leitungen 14 & 9 ist ein Ventil 16 zu Spülzwecken vorgesehen.

Zwischen den Leitungen 9 & 15 ist ein Ventil 17 zur Bypassung des Strippers vorgesehen.

Fig. 8 zeigt ein Sudhaussystem mit einer Einrichtung zur Heißtrubabscheidung 31, beispielsweise einem Whirlpool, der erfindungsgemäßen Strippvorrichtung 100 mit einem Strippbehälter 1, sowie einen nachfolgend angeordneten Würzekühler 32.

Nachfolgend wird ein erfindungsgemäßes Verfahren unter Bezugnahme der Fig. 1,2 und 3 näher erläutert.

Zunächst wird für einen bestimmten Würzetyp vorab ein gewünschtes $\Delta T$, wie im Zusammenhang mit den Fig. 5 erläutert wurde, bestimmt. Dieses $\Delta T$ entspricht dann einer bestimmten Menge an DMS, das ausgetrieben werden soll. Dieses kann beispielhaft wie in Fig. 5 dargestellt anhand einer ermittelten Regelkurve ermittelt werden.

Die Würze kann dabei insbesondere nach der Heißtrubabscheidung, z.B. aus einem Whirlpool, über die Leitung 9 zu dem Zulauf 2 geleitet werden. Die Temperatur der einlaufenden Würze beträgt beispielsweise 80 bis 100°C. Über das Stellventil 10 wird, wie zuvor beschrieben, ein bestimmter Volumenstrom eingestellt derart, dass sich ein bestimmter Füllstand der Würze 41 im Behälter 1 einstellen kann. Das Ableitventil 22 wird entsprechend eingestellt. Der Volumenstrom der Würze beträgt z.B. 5 - 60 $m^3$/h Die über den Einlauf 2 einlaufende Würze wird über die Verteilereinrichtung 4 so verteilt, dass ein nach unten fließender Rieselfilm 19 erzeugt wird (siehe auch Fig. 1 und 2). Die Oberfläche der Rieselfläche liegt in einem Bereich von 5 bis 20 $m^2$.

Über die Leitung 14 wird Strippgas 21 über den Strippgaszulauf 5 in den Behälter 1 eingeleitet. Das Strippgas 21 strömt im Gegenstrom zum herabfallenden Rieselfilm 19 nach oben (siehe auch Fig. 1 und 2) und entweicht über die Strippgasableitung 6 und die Leitung 13. Dabei werden wie zuvor erläutert Wasser und Aromakomponenten 20 abgereichert.

Während des Strippens kann je nach Luftdruck der umgebenden Atmosphäre ein dazu leichter Überdruck entstehen. Die Würze kühlt während des Strippens ab, und die Temperatur der eingeleiteten Würze wird über den Temperatursensor 8 und die der abgekühlten Würze über den Temperatursensor 7 ermittelt. Ist nun beispielsweise $\Delta T$ kleiner als $\Delta T_{soll}$, wird der Strippgasstrom derart erhöht, bis $\Delta T$ einem gewünschten Wert oder Wertebereich entspricht. Dabei wird von dem Regler 24 das Stellventil 11 entsprechend angesteuert. Ist $\Delta T$ größer als $\Delta T_{soll}$, so wird der Strippgasvolumenstrom durch das Stellventil 11 reduziert, bis $\Delta T$ wieder einen entsprechenden Sollwert erreicht oder in einem entsprechenden Sollwertbereich liegt. Durch Einstellen des Strippgasstromes in Abhängigkeit der Temperaturdifferenz $\Delta T$ kann somit stets eine konstante gewünschte Menge an unerwünschten Aromastoffen 20 ausgetrieben werden. Die gestrippte Würze kann über die Würzepumpe 18 und die Leitung 15 einem Würzekühler 32 (siehe Fig. 8) zugeführt werden und beispielsweise auf 1 -25 °C abgekühlt werden. Bei dem Verfahren liegt $\Delta T$ bevorzugt in einem Bereich von 0,1 bis 10°C, insbesondere 0,1 - 5°C.

Bei den zuvor beschriebenen Ausführungsbeispielen würde die Temperaturdifferenz durch Messen der Einlauf- und Auslauftemperatur der Würze über die entsprechenden Sensoren ermittelt. Es ist jedoch auch möglich, das Strippgasvolumen in Abhängigkeit eines zur Temperaturdifferenz proportionalen Werts einzustellen oder zu regeln, der beispielsweise auf der Grundlage der Einlauftemperatur der Würze, sowie des Volumenstroms der Würze bei bekannter Rieselfilmoberfläche bestimmt wird.

**Patentansprüche**

1. Strippverfahren zum Entfernen unerwünschter Aromastoffe aus Würze mit folgenden Schritten:

   - Einleiten der Würze in einen Strippbehälter (1) und Erzeugen eines nach unten fließenden Rieselfilms (19),
   - Einblasen von Strippgas (21) in den Strippbehälter (1) derart, dass ein Strippgasstrom erzeugt wird und
   - Ableiten der Würze,

   wobei der Volumenstrom des Strippgases in Abhängigkeit der Temperaturdifferenz $\Delta T$ zwischen Einlauftemperatur und Auslauftemperatur der Würze oder einem dazu proportionalen Wert geregelt wird.

2. Strippverfahren nach Anspruch 1, **dadurch gekennzeichnet, dass** die Würze vor dem Einleiten in den Strippbehälter (1) einer Heißtrubabscheidung unterzogen wurde und nach dem Ableiten einer Würzekühlung unterzogen wird.

3. Strippverfahren nach mindestens einem der Ansprüche 1 bis 2, **dadurch gekennzeichnet, dass** die Auslauftemperatur kleiner ist als die Einlauftemperatur der Würze, und insbesondere das Strippgas eine Temperatur < 40 °C aufweist.

4. Strippverfahren nach mindestens einem der Ansprüche 1 bis 3, **dadurch gekennzeichnet, dass** der Volumenstrom des Strippgases derart eingestellt bzw. geregelt wird, dass sich eine vorbestimmte Temperaturdifferenz $\Delta T$ der Würze, die in einem Bereich von 0,1 bis 10°C, insbesondere 0,1 - 5°C liegt, ergibt.

5. Verfahren nach mindestens einem der Ansprüche 1 bis 4, **dadurch gekennzeichnet, dass** als Strippgas zumindest eines folgender Gruppe verwendet wird: Inertgas, Luft, $CO_2$, $N_2$, $O_2$ wobei vorzugsweise bei der Verwendung von $N_2$ das $N_2$ durch einen Stickstofferzeuger aus der Umgebungsluft erzeugt wird.

6. Verfahren nach mindestens einem der Ansprüche 1 bis 5, **dadurch gekennzeichnet, dass** während des Strippens in Abhängigkeit vom Luftdruck der umgebenden Atmosphäre ein dazu leichter Überdruck herrscht, der vorzugsweise maximal 250 mbar über dem Luftdruck der umgebenden Atmosphäre liegt.

7. Verfahren nach mindestens einem der Ansprüche 1 bis 6, **dadurch gekennzeichnet, dass** das Strippgas insbesondere zentral über eine nach oben oder unten gerichtete Einströmöffnung (29) in den Gasraum des Strippbehälters eingeleitet wird und/oder direkt in den Füllstand der Würze eingeblasen wird.

8. Verfahren nach mindestens einem der Ansprüche 1 bis 7, **dadurch gekennzeichnet, dass** das Strippgas im Gegenstrom zum nach unten geführten Rieselfilm (19) nach oben aufsteigt.

9. Vorrichtung (100) zum Durchführen des Verfahrens nach mindestens einem der Ansprüche 1 bis 8 oder 15, die folgendes umfasst:

   einen Strippbehälter (1),
   einen Würzezulauf (2),
   eine Verteilereinrichtung (4) zum Erzeugen eines Rieselfilms (19),
   einen Würzeablauf (3),
   eine Strippgaszu- und -ableitung (5, 6), die einen Strippgasstrom im Strippbehälter (1) erzeugen und

   die Vorrichtung weiter eine Regeleinrichtung umfasst, die den Volumenstrom des Strippgases in Abhängigkeit der Temperaturdifferenz $\Delta T$ zwischen Einlauftemperatur und Ablauftemperatur der Würze regelt.

10. Vorrichtung (100) nach Anspruch 9, **dadurch gekennzeichnet, dass** die Vorrichtung einen Temperatursensor (8) zum Messen der Einlauftemperatur der Würze und einen Temperatursensor (7) zum Messen der Auslauftemperatur der Würze umfasst, sowie ein Stellventil (11) zum Einstellen des Volumenstroms des Strippgases.

**11.** Vorrichtung (100) nach mindestens einem der Ansprüche 9 bis 10, **dadurch gekennzeichnet, dass** die Strippgaszuleitung (5) derart ausgebildet ist, dass sie eine zentral im Behälter vorzugsweise nach unten gewandte Einströmöffnung (29) aufweist.

**12.** Vorrichtung (100) nach mindestens einem der Ansprüche 9 bis 11, **dadurch gekennzeichnet, dass** das Verteilerelement (4) eine Dralleinlaufdüse umfasst, die die Würze in Rotation versetzt oder einen Würzeleitschirm oder eine Ringleitung mit mehreren am Umfang angeordneten Öffnungen oder mit einem Ringspalt.

**13.** Vorrichtung (100) nach einem der Ansprüche 9 bis 12, **dadurch gekennzeichnet, dass** der Behälter einen Boden aufweist, dessen Durchmesser nach unten abnimmt und vorzugsweise konisch ausgebildet ist, und/oder einen Sensor( 33a,b) zur Füllstandskontrolle aufweist.

**14.** Sudhausanordnung mit einer Strippvorrichtung nach mindestens einem der Ansprüche 9 bis 13 und eine Einrichtung zur Heißtrubabscheidung (31) sowie einer Einrichtung zur Würzekühlung (32), wobei die Strippvorrichtung (100) zwischen der Einrichtung zur Heißtrubabscheidung und der Einrichtung zur Würzekühlung angeordnet ist.

**15.** Strippverfahren nach mindestens einem der Ansprüche 1-7, **dadurch gekennzeichnet, dass** die Einlauftemperatur der Würze in den Strippbehälter in einem Bereich von 80°-100°C liegt.


**Claims**

**1.** Stripping method for removing undesired flavoring substances from wort, comprising the following steps:

- introducing the wort into a stripping container (1) and producing a falling film (19) flowing downwards,
- blowing in stripping gas (21) into the stripping container (1), such that a stripping gas flow is generated, and
- discharging the wort,
- wherein the volume flow rate of the stripping gas is controlled in response to the temperature difference $\Delta T$ between the inlet temperature and the outlet temperature of the wort or a value proportional to it.

**2.** Stripping method according to claim 1, **characterized in that** the wort has been subjected to hot break separation before being introduced into the stripping container (1) and is subjected to wort cooling after having been discharged.

**3.** Stripping method according to at least one of claims 1 to 2, **characterized in that** the outlet temperature is lower than the inlet temperature of the wort, and in particular the stripping gas has a temperature of < 40 °C.

**4.** Stripping method according to one of claims 1 to 3, **characterized in that** the volume flow rate of the stripping gas is adjusted or controlled such that a predetermined temperature difference $\Delta T$ of the wort lying within a range of 0.1 to 10 °C, in particular 0.1 - 5 °C, results.

**5.** Stripping method according to at least one of Claims 1 to 4, **characterized in that** as stripping gas, at least one from the following group is used: inert gas, air, $CO_2$, $N_2$, $O_2$, where, when $N_2$ is used, it is preferably generated from ambient air by a nitrogen generator.

**6.** Method according to at least one of claims 1 to 5, **characterized in that** during stripping a slight overpressure prevails in response to the air pressure of the ambient atmosphere, the overpressure being preferably maximally 250 mbar above the air pressure of the ambient atmosphere.

**7.** Method according to at least one of claims 1 to 6, **characterized in that** the stripping gas is introduced into the gas chamber of the stripping container in particular centrally via an inflow opening (29) directed to the top or bottom, and/or
is directly blown into the filling level of the wort.

**8.** Method according to at least one of claims 1 to 7, **characterized in that** the stripping gas rises to the top in a reverse current to the falling film (19) guided downwards.

**9.** Device (100) for performing the method according to at least one of claims 1 to 8 or 15, comprising:

a stripping container (1),
a wort feed (2),
a distributor device (4) for generating a falling film (19),
a wort drain (3),
stripping gas supply and discharge lines (5, 6), which produce a stripping gas flow in the stripping container (1), and
the device furthermore comprises a controlling device which controls the volume flow rate of the stripping gas in response to the temperature difference $\Delta T$ between the inlet temperature and the outlet temperature of the wort.

**10.** Device (100) according to claim 9, **characterized in that** the device comprises a temperature sensor (8) for measuring the inlet temperature of the wort, and a temperature sensor (7) for measuring the outlet temperature of the wort, and a control valve (11) for adjusting the volume flow rate of the stripping gas.

**11.** Device (100) at least according to one of claims 9 to 10, **characterized in that** the stripping gas supply line (5) is designed such that it comprises an inflow opening (29) centrally in the container and preferably facing downwards.

**12.** Device (100) according to at least one of claims 9 to 11, **characterized in that** the distributor element (4) comprises a swirl inlet nozzle which rotates the wort, or a wort directional screen or an annular conduit with several openings disposed at the circumference or an annular gap.

**13.** Device (100) according to one of claims 9 to 12, **characterized in that** the container comprises a bottom whose diameter diminishes downwards and preferably has a conical design, and/or a sensor (33a, b) for level control.

**14.** Brewhouse arrangement with a stripping device according to at least one of claims 9 to 13 and an apparatus for hot break separation (31) and an apparatus for wort cooling (32), the stripping device (100) being disposed between the device for hot break separation and the device for wort cooling.

**15.** Stripping method according to at least one of claims 1 to 7, **characterized in that** the inlet temperature of the wort into the stripping container is within a range of 80°-100 °C.

**Revendications**

**1.** Procédé de stripage ou stripping pour l'élimination de substances aromatiques indésirables dans du moût, comprenant les étapes suivantes :

- introduction du moût dans un réservoir de stripage (1) et production d'un film de ruissellement (19) s'écoulant vers le bas,
- insufflation de gaz de stripage (21) dans le réservoir de stripage (1) de manière à produire un écoulement de gaz de stripage, et
- évacuation du moût,

le débit volumique du gaz de stripage étant régulé en fonction de la différence de température $\Delta T$ entre la température d'entrée et la température de sortie du moût ou d'une valeur proportionnelle à cette différence.

**2.** Procédé de stripage selon la revendication 1, **caractérisé en ce qu'**avant l'introduction dans le réservoir de stripage (1), le moût a été soumis à une séparation du trouble à chaud, et est soumis, après l'évacuation, à un refroidissement de moût.

**3.** Procédé de stripage selon l'une au moins des revendications 1 à 2, **caractérisé en ce que** la température d'écoulement de sortie du moût est inférieure à sa température d'entrée, et notamment **en ce que** le gaz de stripage présente une température < 40°C.

**4.** Procédé de stripage selon l'une au moins des revendications 1 à 3, **caractérisé en ce que** le débit volumique du gaz de stripage est réglé ou régulé de manière à ce qu'il en résulte une différence de température $\Delta T$ prédéterminée du moût, qui se situe dans une plage de 0,1 à 10°C, notamment de 0,1-5°C.

**5.** Procédé de stripage selon l'une au moins des revendications 1 à 4, **caractérisé en ce que** l'on utilise en guise de gaz de stripage au moins l'un parmi ceux du groupe suivant : gaz inerte, air, $CO_2$, $N_2$, $O_2$, et **en ce que** de préférence dans le cas de l'utilisation de $N_2$, $N_2$ est produit par un générateur d'azote à partir de l'air ambiant.

**6.** Procédé de stripage selon l'une au moins des revendications 1 à 5, **caractérisé en ce que** pendant le stripage, il règne, en fonction de la pression d'air de l'atmosphère environnante, une légère surpression par rapport à celle-ci, qui se situe de préférence au maximum 250 mbar au-dessus de la pression d'air de l'atmosphère environnante.

**7.** Procédé de stripage selon l'une au moins des revendications 1 à 6, **caractérisé en ce que** le gaz de stripage est introduit dans l'espace de gaz du réservoir de stripage, notamment de manière centrale, par l'intermédiaire d'une ouverture d'entrée (29) dirigée vers le haut ou vers le bas, et/ou directement sous le niveau de remplissage du moût.

**8.** Procédé de stripage selon l'une au moins des revendications 1 à 7, **caractérisé en ce que** le gaz de stripage s'écoule de manière ascendante, à contre-courant du film de ruissellement (19) dirigé vers le bas.

**9.** Installation (100) pour la mise en oeuvre du procédé selon l'une au moins des revendications 1 à 8 ou 15, qui comprend :

un réservoir de stripage (1),
une alimentation en moût (2),
un dispositif de répartition (4) pour produire le film de ruissellement (19),

un écoulement d'évacuation de moût (3),
une conduite d'alimentation et d'évacuation de gaz de stripage (5, 6), qui produisent un écoulement ou flux de gaz de stripage dans le réservoir de stripage (1), et
l'installation comprenant, en outre, un dispositif de régulation, qui régule le débit volumique du gaz de stripage en fonction de la différence de température ΔT entre la température d'entrée et la température de sortie du moût

10. Installation (100) selon la revendication 9, **caractérisée en ce que** l'installation comprend un capteur de température (8) pour mesurer la température d'entrée du moût, et un capteur de température (7) pour mesurer la température d'évacuation du moût, ainsi qu'une vanne de réglage (11) pour régler le débit volumique du gaz de stripage.

11. Installation (100) selon l'une au moins des revendications 9 à 10, **caractérisée en ce que** la conduite d'alimentation de gaz de stripage (5) est conçue de manière à présenter une ouverture d'entrée (29) centrale dans le réservoir, et de préférence dirigée vers le bas.

12. Installation (100) selon l'une au moins des revendications 9 à 11, **caractérisée en ce que** l'élément de répartition (4) comprend une buse d'entrée à tourbillonnement, qui met le moût en rotation, ou bien un écran déflecteur de moût, ou bien une canalisation annulaire avec plusieurs ouvertures agencées à la périphérie ou avec une fente annulaire.

13. Installation (100) selon l'une des revendications 9 à 12, **caractérisée en ce que** le réservoir présente un fond dont le diamètre diminue vers le bas, et est de préférence de configuration conique, et/ou un capteur (33a,b) pour le contrôle du niveau de remplissage.

14. Agencement de salle de brassage comprenant une installation de stripage selon l'une au moins des revendications 9 à 13, et un dispositif de séparation du trouble à chaud (31) ainsi qu'un dispositif de refroidissement de moût (32), agencement dans lequel l'installation de stripage (100) est agencée entre le dispositif de séparation du trouble à chaud et le dispositif de refroidissement de moût.

15. Procédé de stripage selon l'une au moins des revendications 1 - 7, **caractérisé en ce que** la température d'entrée du moût dans le réservoir de stripage, se situe dans une plage de 80°-100°C.

M

20
21

2
6
4

20

19

**40**

21

41

42 29

5

21

3

FIG. 1

Strippgaszufuhr
von außen
Abreicherung DMS
im Gasvolumen

M

20
21

2
6
4

20

19

**40**

21

29

41

5

42

21

3

FIG. 2

FIG. 3

DMS / Wasserdampf

STRIPPGAS

WÜRZE VON WHIRLPOOL

WÜRZE ZU KÜHLER

## Strippen mit Fremdgas

[deltaT 2 °; 13 m³/h]

FIG. 4

EP 2 569 410 B1

DMS Gehalt in Abhängigkeit vom delta T (Würze Ein-Auslauf)

FIG. 5

FIG. 6B

Innengeometrie
Behälter

FIG. 6A

FIG. 8

FIG. 7

**EP 2 569 410 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0189657 A1
- US 2003044500 A1

- DE 102008056744 A1